# EUROPÄISCHE PATENTSCHRIFT

(11) **EP 1 647 814 B1**
(45) Veröffentlichungstag und Bekanntmachung des Hinweises auf die Patenterteilung: **20.02.2008**
(21) Anmeldenummer: 05016722.0
(22) Anmeldetag: 02.08.2005
(51) Int. Cl.: G01F 23/36

(54) **Flüssigkeitsfüllstandsanzeiger**
Liquid level indicator
Indicateur de niveau de liquide

(30) Priorität: 14.10.2004 DE 102004050009
(43) Veröffentlichungstag der Anmeldung: 19.04.2006
(73) Patentinhaber: Maschinenfabrik Reinhausen GmbH, 93059 Regensburg (DE)
(72) Erfinder: Brill, Reiner, 63667 Nidda (DE); Viereck, Karsten, Dr., 93128 Regenstauf (DE); Hämel, Kai, 63637 Jossgrund (DE)

(56) Entgegenhaltungen:
- DE-A1- 4 119 063
- FR-A- 2 845 469
- US-A1- 2003 094 044
- "transducers, level" MACHINE DESIGN, Bd. 33, Nr. 24, 23. November 1961 (1961-11-23), Seite 156, XP002374015 Clevevand , Ohio, US

## Beschreibung

Die Erfindung betrifft einen Füllstandsanzeiger, insbesondere zur Füllstandsmessung im Ölausdehnungsgefäß von Transformatoren, Drosselspulen oder Stufenschaltern.

Ein solcher Füllstandsanzeiger ist aus der EP 1315179 A1 bekannt. Er besitzt ein Geberteil und ein Anzeigeteil, wobei das Geberteil in das Ölausdehnungsgefäß, dessen Füllstand gemessen werden soll, eingebaut ist und einen Schwimmer und eine mit diesem verbundene Schwimmerstange aufweist. Die Schwimmerstange überträgt dabei die Hubbewegung des Schwimmers als Drehbewegung auf eine Welle, die wiederum mit einer Anzeigewelle des Anzeigeteils verbunden ist. Die Anzeigewelle weist einerseits einen Zeiger auf, der gemeinsam mit einem Zifferblatt eine optische Anzeige des Füllstandes ermöglicht. Sie steht andererseits kraftschlüssig mit einem Winkelcodierer in Verbindung, der aus einer Magnetnabe und einem berührungslos mit dieser zusammenwirkenden Signalerzeuger besteht und ein elektrisches analoges Signal des gemessenen Füllstandes erzeugt. Mit dem bekannten Füllstandsanzeiger sind also sowohl eine optische Anzeige als auch die gleichzeitige Erzeugung eines elektrischen analogen Signales als Maß für den gemessenen Füllstand möglich.

Dieser bekannte Füllstandsanzeiger hat sich in der Praxis bewährt. Durch den erforderlichen Winkelcodierer ist er jedoch relativ aufwändig, insbesondere dann, wenn der Winkelcodierer auf einer separaten Welle angeordnet ist, die über zwei Riemenscheiben und ein Skalenseil bzw. einen Verbindungsriemen angetrieben wird.

Aufgabe der Erfindung ist es, einen möglichst einfach aufgebauten Füllstandsanzeiger der eingangs genannten Art anzugeben, der optische Anzeige und Erzeugung eines analogen elektrischen Signals gleichermaßen gestattet.

Diese Aufgabe wird durch einen Füllstandsanzeiger mit den Merkmalen des ersten Patentanspruches gelöst. Die abhängigen Ansprüche betreffen besonders vorteilhafte Weiterbildungen der Erfindung.

Der allgemeine erfinderische Gedanke besteht darin, als Drehwinkelgeber, d. h. als elektrischen Signalerzeuger, bei einem Füllstandsanzeiger einen distanzmessenden Sensor vorzusehen. Ein solcher Sensor baut auf seiner aktiven Fläche ein Feld auf. In das Feld des Sensors wird ein zu erfassendes Abstandselement gebracht, wodurch sich die Feldstärke ändert. Der Sensor wertet diese Feldstärkenänderung aus und liefert ein analoges Strom- oder Spannungssignal proportional zum Abstand des Abstandselementes zum Sensor.

Besonders vorteilhaft wird bei der Erfindung als Abstandselement eine Scheibe in Form einer Evolvente vorgesehen. Der Radius dieser Scheibe erhöht sich proportional mit dem Drehwinkel der Anzeigewelle, auf der diese Scheibe befestigt ist. Wird eine solche Scheibe an dem beschriebenen Sensor vorbei gedreht, so vergrößert oder verkleinert sich damit der Luftspalt zwischen Scheibe und Sensor in Abhängigkeit vom jeweiligen aktuellen Drehwinkel. Damit wird auf einfache Weise ein analoges Ausgangssignal proportional zum jeweiligen Drehwinkel, d. h. zum Ausschlag der Anzeigewelle und damit proportional zum Füllstand erzeugt.

Das Dokument XP002374015 offenbart ein Abstandelement in Form einer evolventenförmigen Scheibe, deren Abstand zur wirksamen Elektrodefläche des Messkondensators in Abhängigkeit der Schwimmerposition und damit der Winklichstellung der Scheibe variert.

Die Erfindung soll nachfolgend an Hand von Zeichnungen beispielhaft noch näher erläutert werden. Es zeigen:

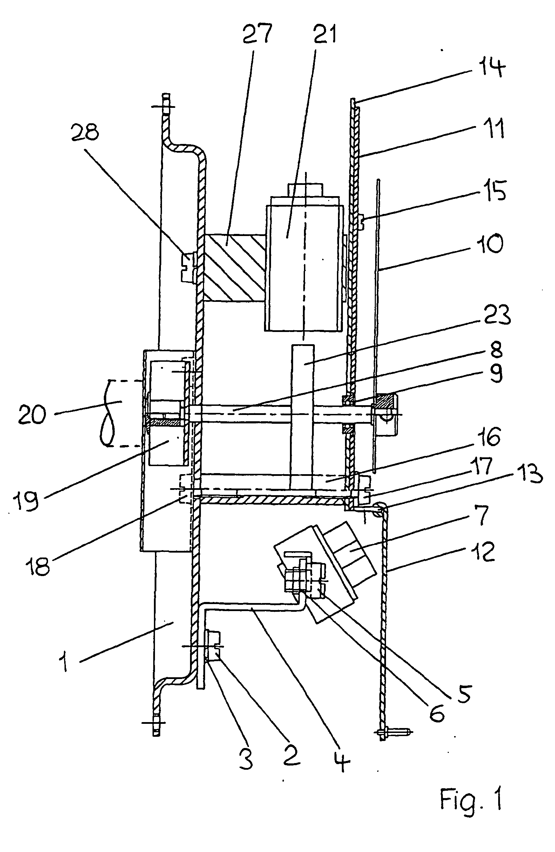

- Figur 1: einen erfindungsgemäßen Füllstandsanzeiger in schematischer seitlicher Schnittdarstellung

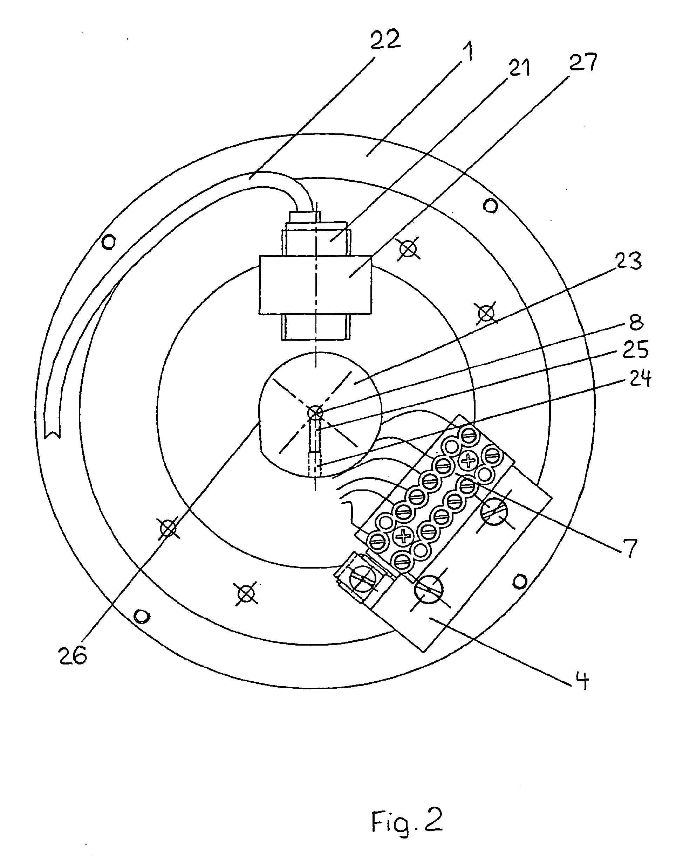

- Figur 2: diesen wiederum schematisch von oben
- Figur 3: eine schematische Darstellung einer evolventenförmigen Scheibe als erfindungsgemäßes Abstandselement, und zwar
a) in tatsächlicher Dimensionierung der stirnseitigen Kontur relativ zum Drehpunkt mit veränderlichem Radius
b) in linearer Abwicklung.

Eine Grundplatte 1 trägt den gesamten Füllstandsanzeiger. Daran ist mittels einer Schraube 2 und eines Federrings 3 ein Klemmenträger 4 angeordnet, auf diesem wiederum mit einer weiteren Schraube 5 eine Kabelführung 6 und eine Klemmleiste 7 zum Anschluss der nur andeutungsweise gezeigten elektrischen Leitungen. Mittig durch das Gerät verläuft eine drehbare Anzeigewelle 8, die in einem Achslager 9 gelagert ist, mit einem an einem Ende daran befestigten Zeiger 10, der seinerseits mit einem Zifferblatt 11 korrespondiert, das entsprechende Markierungen zur Füllstandshöhe trägt. Unterhalb des Zifferblattes 11 wird die Frontseite des Gerätes durch eine Blende 12 abgeschlossen. Im oberen Bereich dieser Blende 12 befinden sich zu deren beweglicher Anlenkung Scharnierfedern 13. Zur Befestigung des Zifferblattes 11 auf einem Zifferblattträger 14 dient eine Schraube 15. Die Befestigung des Zifferblattträgers 15 wiederum erfolgt mittels Gewindebolzen 16 mit Innengewinde und seitlich eingefügten Schrauben 17 bzw. 18 an der Grundplatte 1. Am freien Ende der Anzeigewelle 8, auf der dem Zeiger 10 abgewandten Seite, befindet sich eine Magnetkupplung 19 zur Verbindung der Anzeigewelle 8 mit einer hier nur angedeuteten weiteren Welle 20. Diese weitere Welle 20 überträgt auf bekannte Weise die in eine Drehbewegung umgewandelte Hubbewegung eines nicht dargestellten Schwimmers im entsprechenden Ölausdehnungsgefäß, dessen Füllstand erfasst werden soll. Bis hierhin entspricht der Füllstandsanzeiger dem aus der eingangs genannten EP 1315179 A1 bekannten Stand der Technik.

Erfindungsgemäß ist auf der Grundplatte 1 ein distanzmessender Sensor 21 angeordnet, dessen aktive Fläche hin zur Anzeigewelle 8 gerichtet ist. Zu diesem Sensor 21 führen elektrische Leitungen 22, die nur angedeutet sind. Auf der Anzeigewelle 8 ist nach einem weiteren Merkmal der Erfindung eine Scheibe 23 als Abstandselement zur Änderung der Feldstärke des distanzmesssenden Sensors 21 fest angeordnet. Die Scheibe 23 besteht aus einem Material, das eine Änderung der Feldstärke des durch den Sensor 21 erzeugten Feldes bewirkt.

Die Scheibe 23 ist in Form einer Evolvente ausgebildet; ihr Radius verändert sich kontinuierlich innerhalb eines bestimmten Winkelbereiches. Die Scheibe 23 weist weiterhin eine radiale Gewindebohrung 24 auf, die eine Klemmschraube 25 zur Befestigung auf der Anzeigewelle 8 aufnimmt. Im Rahmen der Erfindung sind natürlich auch andere Befestigungsarten der Scheibe 23 auf der Anzeigewelle 8 möglich; hier sollen nur beispielsweise eine verzahnte Ausführung der Anzeigewelle 8 oder auch eine Nut/Feder-Verbindung erwähnt sein. Die Scheibe 23 weist eine stirnseitige Kontur 26 auf, deren Abstand vom Drehpunkt, d. h. der Anzeigewelle 8, sich über einen bestimmten Winkelbereich α kontinuierlich verändert.

Die Befestigung des Sensors 21 erfolgt durch eine Sensorhalterung 27, die ihn umschließt, sowie einer Schraube 28 an der Grundplatte 1.

Distanzmessende Sensoren sind per se bekannt und kommerziell verfügbar. Sie werden beispielsweise von der Firma MICRO-EPSILON im Internet unter http://www.capancdt.de/abstandssensor.htm erläutert oder werden auch von der Firma Baumer Electric AG, CH, angeboten und sind hier unter
http://www.baumerelectric.com/baumer/bauer/boxd.html beschrieben.

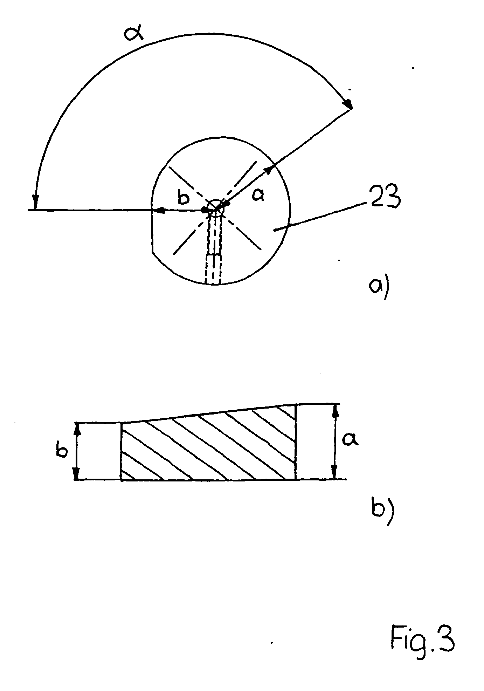

In Figur 3 ist noch einmal im Detail die stirnseitige Kontur 26 der Scheibe 23 gezeigt; es ist schematisch dargestellt, wie sich deren Abstand innerhalb zweier Grenzwerte a und b über einen Winkel α kontinuierlich ändert.

Ändert sich der zu erfassende Füllstand im Ausdehnungsgefäß, wird die Hubänderung des (nicht dargestellten) Schwimmers auf aus dem Stand der Technik bekannte Weise in eine Drehbewegung der Welle 20 und, über die Magnetkupplung 19, die Anzeigewelle 8 umgewandelt. Dadurch ändert sich zum einen der Ausschlag des Zeigers 10 auf der Anzeigewelle 8 relativ zum Zifferblatt 11; es erfolgt eine optische Anzeige des Füllstandes. Zum anderen verändert sich dadurch, dass die Scheibe 23 am Sensor 21 vorbeigedreht wird, der Luftspalt zwischen Scheibe 23 und Sensor 21. Im Ergebnis erzeugt der Sensor 21 ein elektrisches Ausgangssignal proportional dem Drehwinkel der Anzeigewelle 8 als Maß für den erfassten Füllstand.

Die Dimensionierung der stirnseitigen Kontur 26 der Scheibe 23 wird so gewählt, dass der in Figur 3 dargestellte Winkel α dem Winkel zwischen der MIN- und der MAX-Markierung auf dem Zifferblatt 11 entspricht, den der Zeiger 10 maximal überstreicht - dies ist gleichzeitig der maximal mögliche Drehwinkel der Anzeigewelle 8. Dies ist in weiten Grenzen variierbar. Ebenso variierbar ist die Dimensionierung der Scheibe 23 hinsichtlich der relativen Steigung ihrer stirnseitigen Kontur 26, d. h. des Unterschiedes zwischen den Werten a und b über einen bestimmten Winkel α, wie in Figur 3 gezeigt.

Im Rahmen der Erfindung sind auch zahlreiche andere Ausführungsformen und Geometrien dieser Kontur 26 möglich. Beispielsweise kann durch eine entsprechende Geometrie eine nichtproportionale Signalgabe bezogen auf den Messbereich erreicht werden, es können bestimmte Messbereiche unterdrückt werden usw.

Das durch den Sensor 21 erzeugte analoge elektrische Ausgangssignal kann auf bekannte Weise auch z. B. über eine RS485-Schnittstelle weiter verarbeitet werden.

### Bezugszeichenaufstellung

- 1: Grundplatte
- 2: Schraube
- 3: Federring
- 4: Klemmenträger
- 5: Schraube
- 6: Kabelführung
- 7: Klemmleiste
- 8: Anzeigewelle
- 9: Achslager
- 10: Zeiger
- 11: Zifferblatt
- 12: Blende
- 13: Scharnierfedern
- 14: Zifferblattträger
- 15: Schraube
- 16: Gewindebolzen
- 17: Schraube
- 18: Schraube
- 19: Magnetkupplung
- 20: Welle
- 21: Sensor
- 22: elektrische Leitungen
- 23: Scheibe
- 24: Gewindebohrung
- 25: Klemmschraube
- 26: stirnseitige Kontur
- 27: Sensorhalterung
- 28: Schraube

## Patentansprüche

1. Füllstandsanzeiger, insbesondere zur Füllstandsmessung in einem Ölausdehnungsgefäß eines Transformators, einer Drosselspule oder eines Stufenschalters,
bestehend aus einem Geberteil und einem Anzeigeteil,
wobei das Geberteil in das Ölausdehnungsgefäß, dessen Füllstand gemessen werden soll, eingebaut ist und einen Schwimmer und eine mit diesem verbundene Schwimmerstange aufweist,
wobei die Schwimmerstange die Hubbewegung des Schwimmers als Drehbewegung auf eine Welle (20) überträgt,
wobei ein elektrische Signale erzeugender Drehwinkelgeber vorgesehen ist, der im Anzeigeteil mit einer Anzeigewelle (8) in Verbindung steht,
wobei auf der Anzeigewelle (8) eine Scheibe (23) fest angeordnet ist
und wobei die Scheibe (23) einen winkelabhängig unterschiedlichen Radius aufweist, derart, dass ihre stirnseitige Kontur (26) von der Kreisform abweicht,
**dadurch gekennzeichnet,**
**dass** die Welle (20) mit der Anzeigewelle (8) des Anzeigeteils in Verbindung steht,
**dass** die Anzeigewelle (8) einen Zeiger (10) trägt, der mit einem Zifferblatt (11) korrespondiert,
**dass** als Drehwinkelgeber ein distanzmessender Sensor (21) vorgesehen ist,
**dass** die Scheibe (23) aus einem ein elektrisches bzw. magnetisches Feld beeinflussenden Material besteht
und **dass** der Sensor (21) im Anzeigeteil derart angeordnet ist, dass sein aktiver Funktionsbereich hin zur Kontur (26) der Scheibe (23) ausgerichtet ist, derart, dass zwischen Sensor (21) und Scheibe (23) ein abhängig von der jeweiligen Stellung der Scheibe (23) variabler Luftspalt verbleibt.

2. Füllstandsanzeiger nach Anspruch 1,
**dadurch gekennzeichnet,**
**dass** die Scheibe (23) aus Metall, insbesondere aus Stahl oder Aluminium besteht.

3. Füllstandsanzeiger nach Anspruch 1 oder 2,
**dadurch gekennzeichnet,**
**dass** die Kontur (26) der Scheibe (23) evolventenförmig oder zumindest teilweise exzenterförmig ausgebildet ist.

## Claims

1. Filling state indicator, particularly for filling state measurement in an oil expansion vessel of a transformer, a choke coil or a tap changer, consisting of a transmitter part and an indicator part, wherein the transmitter part is installed in the oil expansion vessel, the filling state of which is to be measured, and comprises a float and a float rod connected therewith, wherein the float rod transmits the stroke movement of the float as rotational movement to a shaft (20), wherein a rotary angle transmitter, which produces an electrical signal and which is connected in the indicator part with the indicator shaft (8), is provided, wherein a disc (23) is fixedly arranged on the indicator shaft (8) and wherein the disc (23) has a radius differing as a function of angle in such a manner that its end face profile (26) departs from a circular shape, **characterised in that** the shaft (20) is connected with the indicator shaft (8) of the indicator part, that the indicator shaft (8) carries a pointer (10) corresponding with a dial (11), that a distance-measuring sensor (21) is provided as rotational angle transmitter, that the disc (23) consists of a material influencing an electrical or a magnetic field and that the sensor (21) is so arranged in the indicator part that its active functional region is oriented toward the profile (26) of the disc (23) in such a manner that an air gap variable in dependence on the respective setting of the disc (23) is left between sensor (21) and disc (22).

2. Filling state indicator according to claim 1, **characterised in that** the disc (23) consists of metal, particularly of steel or aluminium.

3. Filling state indicator according to claim 1 or 2, **characterised in that** the profile (26) of the disc (23) is formed to be involute-shaped or at least partly eccentric.

## Revendications

1. Indicateur de niveau de liquide, notamment du niveau dans un récipient de dilatation d'huile d'un transformateur, d'une bobine de choc ou d'un commutateur à gradins, qui est composé d'une partie émettrice et. d'une partie indicatrice, la partie émettrice étant montée dans le récipient de dilatation d'huile dont il faut mesurer le niveau et présentant un flotteur avec, liée à celui-ci, une tige qui transmet le mouvement, de course du flotteur à un arbre (20) sous la forme d'un mouvement de rotation, et avec un capteur d'angle de rotation qui produit des signaux électriques et qui est relié dans la partie indicatrice à un arbre (8) sur lequel est monté solidaire un disque (23) qui présente un rayon variant en fonction de l'angle, de sorte que son contour frontal (26) s'écarte de la forme d'un cercle,
**caractérisé en ce que**
- l'arbre (20) est relié à l'arbre (8) de la partie indicatrice,
- l'arbre indicateur (8) porte une aiguille (10) en correspondance avec une cadran chiffré (11),
- un capteur (21) mesurant les distances est prévu comme capteur de l'angle de rotation,
- le disque (23) est fait d'un matériau influençant un champ magnétique, ou électriques, et
- le capteur (21) est disposé dans la partie indicatrice avec sa zone fonctionnelle active orientée vers le contour (26) du disque (23) et de manière qu'entre le capteur (21) et le disque (23) subsiste une fente d'air qui varie en fonction de la position du disque (23).

2. Indicateur de niveau selon la revendication 1,
**caractérisé en ce que**
le disque (23) est en métal, notamment en acier ou en aluminium.

3. Indicateur de niveau selon la revendication 1 ou 2,
**caractérisé en ce que**
le contour du disque (23) a la forme d'une développante ou est au moins partiellement excentré.
